Europäisches Patentamt

European Patent Office

Office européen des brevets

(11) Publication number: **0 139 166 B1**

# EUROPEAN PATENT SPECIFICATION

(45) Date of publication of patent specification: **28.08.91**  (51) Int. Cl.⁵: **G02B 6/44**

(21) Application number: **84110074.6**

(22) Date of filing: **23.08.84**

(54) Optical fiber cable.

(30) Priority: **23.08.83 JP 154263/83**

(43) Date of publication of application:
**02.05.85 Bulletin 85/18**

(45) Publication of the grant of the patent:
**28.08.91 Bulletin 91/35**

(84) Designated Contracting States:
**BE DE GB**

(56) References cited:
**DE-A- 2 505 319**
**DE-A- 2 948 896**
**US-A- 3 916 078**
**US-A- 4 009 932**
**US-A- 4 093 342**

(73) Proprietor: **SUMITOMO ELECTRIC INDUSTRIES LIMITED**
**No. 15, Kitahama 5-chome, Higashi-ku**
**Osaka-shi, Osaka 541(JP)**

Proprietor: **NIPPON TELEGRAPH AND TELE-PHONE CORPORATION**
**1-6 Uchisaiwaicho 1-chome Chiyoda-ku Tokyo(JP)**

(72) Inventor: **Yonechi, Shinichi c/o Yokohama Works**
**Sumitomo Electric Industries Ltd. 1, Taya-cho**
**Totsuka-ku Yokohama-shi Kanagawa-ken(JP)**
Inventor: **Ishida, Yukinori**
**2562-19, Motoyoshi-cho**
**Mito-shi Ibaraki-ken(JP)**
Inventor: **Kawase, Masaaki**
**45-38, Yoshizawa-cho**
**Mito-shi Ibaraki-ken(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

**Description**

The present invention relates to an optical fiber cable comprising a central core including high tensile elements and having cushioning properties; at least one optical fiber stranded around the core; and a jacket around the or each optical fiber.

Such a cable is known from DE-A-2 505 319. In this known cable, two groups of filaments are stranded around a cushioning member in opposite directions, with the two groups being interwoven. The stranding pitch of the core fibers is less than or equal to the pitch of the stranded optical fibers.

Remarkable progress has been made in the optical fiber cables as a new communication medium, and numerous cable structures have been proposed and utilized.

In optical fiber cables, it is important to protect optical fibers assembled in the cable against external forces, since the optical fibers have the drawback, that when deformed upon application of external forces, they tend to break and/or suffer from increased attenuation.

To overcome these drawbacks of optical fibers, several cable structures have been proposed. One such cable structure has a buffer material provided around the optical fibers for protecting them against external forces or pressure. Another cable structure has a hard shell in which the optical fibers are contained.

In order to withstand tensile stress applied to the cable, a high tensile filament, the so-called tension member, is assembled in the cable to prevent stretching of the whole cable, so that tensile stress is not exerted on the optical fibers. Even if the optical fiber cable contains a tension member, it can be stretched and, therefore, the optical fibers contained in the cable are also stretched to nearly the same extent as in the cable. Since the optical fiber cable is likely to be subjected to a large tensile stress, for example, during installation of the cable, a tension member of considerable thickness is inevitably required, which results in increase of the diameter and weight of the cable. Therefore, the preferred properties of the optical fibers such as light weight, small diameter and flexibility are undesirably worsened.

It is known that if a residual strain is present in an optical fiber, the time required for the optical fiber to break (breaking time) is shortened. This is the reason why the conventional optical fiber cables are made such that they are not easily stretched in order to avoid the application of elongation strain on the optical fibers contained in the cable.

An object of the present invention is to provide an optical fiber cable having a structure such that, even if the cable is stretched, the optical fibers contained therein do not suffer from elongation strain.

According to the invention, the optical fiber cable initially defined is characterized in that the core comprises at least two high tensile stranded filaments; and the strand pitch of the high tensile filaments of the core is greater than that of said at least one optical fiber.

For a better understanding of the invention, and to show how the same may be carried into effect, reference will now be made, by way of example, to the accompanying drawings, in which:-

Fig. 1A illustrates the principle of the present invention;

Fig. 1B is a graph showing analytical results obtained mathematically;

Fig. 2 is a schematic view of the fundamental structure of the optical fiber cable of the present invention; and

Figs. 3 and 4 respectively are schematic views of further embodiments of the optical fiber cable of the present invention.

In the present invention, the optical fiber(s) is (are) helically wound around the core so that when the whole cable is stretched, the reduction in radius of the core is greater than that in the radius of the helix followed by the optical fiber(s). Due to such configuration of the core and the optical fiber(s), the tension applied to the optical fiber(s) is not increased when the cable is stretched.

In the present invention, it is essential for the cable to have a core which shrinks considerably in radial direction when the whole cable is stretched. This is achieved by the core having cushioning properties and comprising filaments in a stranded structure having a strand pitch greater than that of the helically wound optical fiber(s). The core comprises at least two filaments, preferably at least four, more preferably at least six. In some applications, the core may contain more than eight filaments. The number of optical fibers to be assembled depends on the end use of the optical fiber cable.

Usually, the pitch of the helically stranded optical fiber(s) is from 5 to 30 cm, preferably from 10 to 20 cm. The pitch of the stranded filaments of the core is greater than that of the optical fiber(s) by from 10 to 40 cm, preferably by from 15 to 35 cm.

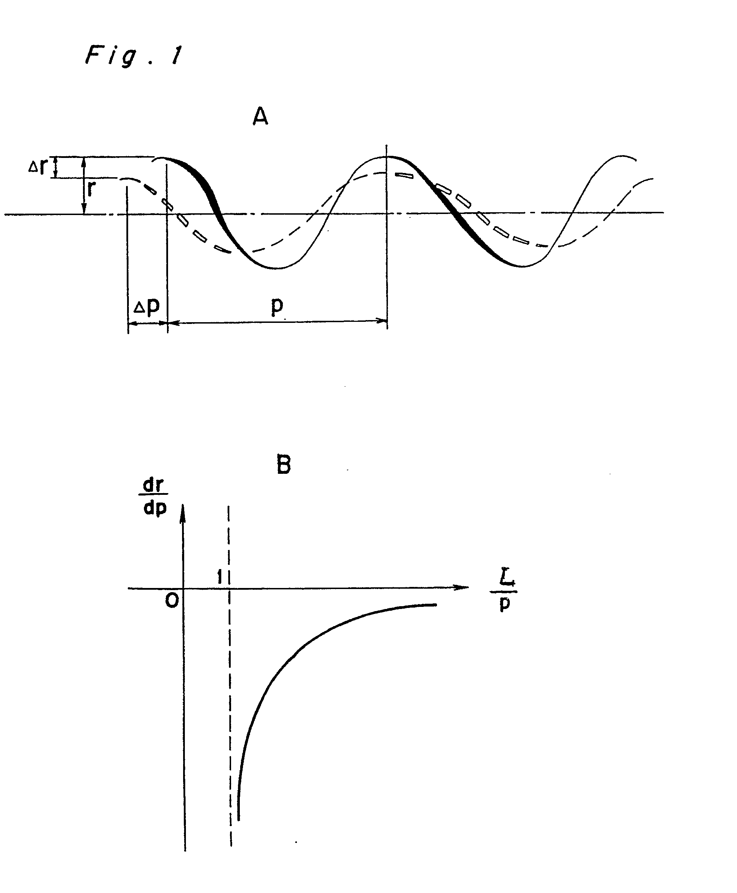

Reference will now be made to Figs. 1A and 1B.

A helix (radius: r; pitch: p; length along the helix over one pitch distance: L) as shown in Fig. 1A is stretched in the axial direction by $\Delta$ p. Then it follows a form as indicated by the dotted line. The change in the radius can be represented by:

2

$$\triangle r = \frac{dr}{dp} \triangle p$$

Thus the rate of change of radius
with pitch can be represented by:

$$\frac{dr}{dp} = \frac{-1}{2\pi\sqrt{(\frac{L}{p})^2 - 1}}$$

In Fig. 1B, dr/dp is plotted against the ratio (L/p) of the length (L) to pitch (p). When the line is not stranded, (i.e. the pitch is infinite), the ratio L/p is 1 (one). When the radius r is constant, the ratio L/p decreases as p increases. As apparent from the graph of Fig. 1B, the smaller the ratio L/p, the larger the degree of reduction in the radius. In other words, the more loosely the filament is stranded and thus, the larger the pitch of the filament, the greater the shrinkage in the radial direction on stretching.

This principle is applied to the present invention. That is, the core of the present invention has a stranded structure of filaments with a longer pitch than that of the optical fiber(s) stranded thereupon.

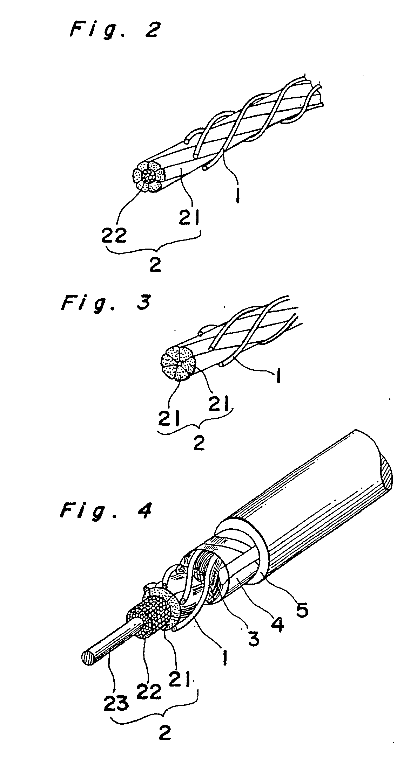

Fig 2 is a schematic view illustrating the fundamental structure of the optical fiber cable of the present invention.

Fig. 2 shows an optical fiber 1, which is usually provided with a plastic coating. A plurality of optical fibers 1, for example three optical fibers, are helically stranded around a core 2. The core 2 is of a stranded structure as described above. For example, a preferred core comprises a plurality of high tensile filaments 21, for example six high tensile filaments, helically stranded around a cushioning member 22. The cushioning member 22 is made of a material which, upon stretching of the core 2, permits the filaments 21 to move in the radial direction and thus the radius of the core 2 to be reduced. Preferably, the cushioning member 22 is made of a sponge-like material, woollen yarn-like material, etc.

If the core 2 does not include any cushioning member, the filaments 21 do not move and thus the core 2 does not shrink in the radial direction. Therefore, the elongation strain in the optical fibers 1 is not sufficiently prevented. In the structure shown in Fig. 2, the strand pitch of the filaments 21 is greater than that of the optical fibers 1. When the whole cable is stretched in the longitudinal direction, a reduction in the radius of the core 2 is, therefore, greater than that in the radius of the helix of the optical fibers 1. This can be understood from Fig. 1. Thus, the tension applied to the optical fibers is not increased; rather, when tension remains in the optical fibers, it is likely to be reduced and relieved.

Fig. 3 is a schematic view of another embodiment of the optical fiber cable of the present invention.

A core 2 is fabricated by stranding a plurality of high tensile filaments 21. This core 2, however, can be fabricated by stranding a plurality of cushioning materials alone or materials having both cushioning properties and high tensile properties such as Kevlar (trade name) fiber alone in place of the high tensile filaments 21.

Also in this case, the strand pitch of the filaments of the core should be greater than that of the optical fibers.

Fig. 4 is a schematic view of a further embodiment of the optical fiber cable of the present invention.

A core 2 comprises high tensile filaments 21, a cushioning material 22, and a central tension member 23. The central tension member 23 and the cushioning material 22 may not be stranded. A plurality of high tensile filaments 21 are stranded at a greater pitch than that of the optical fibers 1.

As described above, the core 2 can be fabricated in combination with the central tension member 23. In such a case, double effects can be expected; that is, the central tension member prevents the cable from being stretched and, even if the cable is stretched, the optical fibers 1 are free from elongation strain.

Clearances between the optical fibers 1 are filled with a filling material 3. A tape 4 is wound around the filling material 3, which is then covered with a sheath 5, or jacket. Preferably, the central tension member 23 is a steel wire or FRP (fiber reinforced plastics), the cushioning material 22 is a sponge-like plastics foam, the high tensile filaments are Kevlar (trade name) fibers, the packing material 3 is a plastics yarn the tape winding layer 4 is a plastics tape, and the sheath 5 is made of polyethylene or PVC.

In Figs. 2 and 3, layers surrounding the optical fibers such as a tape layer, a sheath layer and so on are

EP 0 139 166 B1

not illustrated. Needless to say, the final cable is produced by providing a tape winding layer and a sheath as in Fig. 4.

In the above-described embodiment, the direction in which the core 2 is stranded is different from that in which the optical fibers 1 are stranded. However, they may be stranded in the same direction.

More particularly, an optical fiber cable has been described in which an assembled optical fiber does not suffer from elongation strain even when the cable is stretched by external forces applied along its longitudinal direction.

## Claims

1. An optical fiber cable comprising a central core (2) including high tensile elements and having cushioning properties; at least one optical fiber stranded around the core (2); and a jacket (3,45) around the or each optical fibre (1); characterized in that:
   the core (2) comprises at least two high tensile stranded filaments (21); and
   the strand pitch of the high tensile filaments (21) of the core (2) is greater than that of said at least one optical fiber (1).

2. An optical fiber cable as claimed in claim 1, characterized in that the core (2) comprises a cushioning member (22) and at least two high tensile filaments (21) stranded around the cushioning member (22).

3. An optical fiber cable as claimed in claim 1, characterized in that the core (2) comprises a central tension member (23), a cushioning member (22) around the central tension member and at least two high tensile filaments (21) stranded around the cushioning member (22).

4. An optical fiber cable as claimed in claim 1, characterized in that the core only comprises tensile filaments stranded with one another, said filaments (21) being formed of a material having cushioning properties.

5. An optical fiber cable as claimed in any preceding claim, characterized in that the pitch of the or each helically stranded optical fiber (1) is from 5 to 30 cm, and the pitch of the stranded filaments (21) of the core is greater than that of the optical fiber (1) by from 10 to 40 cm.

## Revendications

1. Câble à fibre(s) optique(s) comprenant une âme centrale (2) reprenant des éléments à haute résistance à la traction et possédant des propriétés d'amortissement, au moins une fibre optique torsadée autour de l'âme centrale (2), et un manteau (3,45) entourant la ou chacune des fibres optiques (1), **caractérisé en ce que** l'âme centrale (2) comprend au moins deux filaments (21) torsadés, à haute résistance à la traction, le pas de torsion des filaments (21) torsadés, à haute résistance à la traction, étant supérieur à celui de la dite ou des dites fibres optiques (1).

2. Câble à fibre(s) optique(s) selon la revendication 1, **caractérisé en ce que** l'âme centrale (2) comprend un membre d'amortissement (22) et au moins deux filaments (21) torsadés, à haute résistance à la traction, torsadés autour du membre d'amortissement (22).

3. Câble à fibre(s) optique(s) selon la revendication 1, **caractérisé en ce que** l'âme centrale (2) comprend un membre central de traction (23), un membre d'amortissement (22) autour du membre central de traction et au moins deux filaments (21) à haute résistance à la traction, torsadés autour du membre d'amortissement (22).

4. Câble à fibre(s) optique(s) selon la revendication 1, **caractérisé en ce que** l'âme centrale (2) comprend uniquement des filaments de résistance à la traction torsadés l'un autour de l'autre, les dits filaments (21) étant formés d'un matériau possédant des propriétés d'amortissement.

5. Câble à fibre(s) optique(s) selon l'une quelconque des revendications précédentes, **caractérisé en ce que** le pas de torsion de la fibre (1) ou de chacune des fibres (1) torsadée(s) en hélice est de 5 à 30 cm, tandis que le pas de torsion des filaments torsadés de l'âme centrale est supérieur de 10 à 40cm à celui de la fibre optique.

4

**Patentansprüche**

1. Optisches Kabel, umfassend
   einen zentralen Kern (2), der hochdehnbare Elemente einschließt und puffernde Eigenschaften hat;
   wenigstens eine optische Faser, die um den Kern (2) verseilt ist; und
   eine Umhüllung (3, 45) um die oder jede optische Faser (1);
   dadurch **gekennzeichnet, daß**
   der Kern (2) wenigstens zwei hochdehnbare, verseilte Fasern umfaßt; und
   die Verseilungssteigung der hochdehnbaren Fasern (21) des Kerns (2) größer ist als die der wenigstens einen optischen Faser (1).

2. Optisches Kabel nach Anspruch 1,
   dadurch **gekennzeichnet, daß** der Kern (2) ein Pufferteil (22) und wenigstens zwei hochdehnbare Fasern (21) umfaßt, die um das Pufferteil (22) herum verseilt sind.

3. Optisches Kabel nach Anspruch 1,
   dadurch **gekennzeichnet, daß** der Kern (2) ein zentrales Dehnungsteil (23), ein Pufferteil (22) um das zentrale Dehnungsteil und wenigstens zwei hochdehnbare Fasern (21) umfaßt, die um das Pufferteil (22) herum verseilt sind.

4. Optisches Kabel nach Anspruch 1,
   dadurch **gekennzeichnet, daß** der Kern nur dehnbare Fasern umfaßt, die einzeln miteinander verseilt sind, wobei die Fasern (21) aus einem Material gebildet sind, welches puffernde Eigenschaften hat.

5. Optisches Kabel nach einem der vorangehenden Ansprüche,
   dadurch **gekennzeichnet, daß** die Steigung der oder jeder schraubenförmig verseilten optischen Faser (1) 5 bis 30 cm beträgt, und die Steigung der verseilten Fasern (21) des Kernes um von 10 bis 40 cm größer ist als die der optischen Faser (1).

*Fig . 1*

A

$$\Delta r \quad r$$

$$\Delta p \qquad p$$

B

$$\frac{dr}{dp}$$

$$O \qquad 1 \qquad \frac{L}{p}$$

Fig. 2

Fig. 3

Fig. 4